# DEMANDE DE BREVET EUROPEEN

(11) **EP 0 905 808 A1**
(43) Date de publication de la demande: **31.03.1999**
(21) Numéro de dépôt: 98401908.3
(22) Date de dépôt: 27.07.1998
(51) Int. Cl.: H01M 4/62, H01M 6/18, H01M 4/02

(54) **Liant polymère pour électrode de générateur à électrolyte organique**

(30) Priorité: 04.08.1997 FR 9709949
(71) Demandeur: ALCATEL, 75008 Paris (FR)
(72) Inventeur: Simon, Bernard, 92130 Issy les Moulineaux (FR); Galaj, Stanislas, 94110 Arcueil (FR); Boeuve, Jean-Pierre, 91460 Marcoussis (FR)
(74) Mandataire: El Manouni, Josiane

(57) **Abrégé**

L'invention concerne un liant pour électrode de système électrochimique à électrolyte organique qui contient au moins deux polymères susceptibles de former, après mélange, un complexe identifiable par des mesures de propriétés physicochimiques.

Les deux polymères, par exemple l'acide polyacrylique et le polyoxyde d'éthylène, sont mélangés de préférence en proportion non stoechiométrique.

La présente invention s'étend en outre au procédé de fabrication d'une électrode contenant le liant décrit précédemment et aux systèmes électrochimiques comportant une telle électrode.

## Description

La présente invention concerne un nouveau liant polymère pour l'élaboration d'électrodes destinées à être utilisées dans un système électrochimique qui comporte un électrolyte non aqueux, en particulier un générateur rechargeable à électrolyte organique.

La présente invention s'étend en outre au procédé de fabrication de ces électrodes et aux systèmes électrochimiques comportant de telles électrodes.

Les électrodes des générateurs rechargeables à électrolyte organique classiques contiennent une matière électrochimiquement active qui constitue une structure d'accueil dans laquelle les cations, par exemple l'ion lithium, s'insèrent et se désinsèrent au cours du cyclage. Chaque électrode est obtenue par dépôt d'une pâte sur un collecteur de courant, ladite pâte contenant la matière active, éventuellement des additifs conducteurs, un liant polymère et un diluant.

Le liant polymère remplit de multiples fonctions et doit présenter des propriétés propres à chacune de ces fonctions.
a) Tout d'abord, le liant polymère doit assurer la cohésion de la matière active qui est sous forme pulvérulente, sans masquer une part importante de la surface électrochimiquement active. Cet effet dépend des propriétés de mouillage du liant. Une bonne liaison avec la matière active est généralement garantie par l'existence, dans le liant polymère, de groupements donnant lieu à des liaisons chimiques ou hydrogène, comme les groupements hydroxyle, carboxyle et amide. Un compromis doit cependant être trouvé car une interaction trop forte du liant avec la matière active conduit à un recouvrement trop important qui entraîne une baisse de la surface active et par voie de conséquence de la capacité à régime élevé.
b) Ensuite, le liant polymère doit permettre l'adhésion de la pâte sur le collecteur de courant.
c) Le liant polymère doit conférer à l'électrode une souplesse suffisante pour la manipulation, en particulier pour supporter l'étape de spiralage dans le cas du montage d'accumulateurs cylindriques.
d) Le liant polymère doit accompagner les variations dimensionnelles de la matière active lors des cycles de charge et de décharge.

Ces quatre propriétés mécaniques de base doivent être assurées avant l'assemblage de l'accumulateur et tout au long de son fonctionnement.

Le liant polymère doit être compatible avec les électrolytes utilisés, de préférence sans nécessiter une étape de réticulation qui compliquerait la formulation de l'électrode et le procédé.

Enfin, les réducteurs et les oxydants utilisés comme matériaux actifs étant très puissants, le liant doit posséder une réactivité la plus faible possible pour être capable de supporter, sans dégradation, des conditions extrêmes de fonctionnement.

Il apparaît donc difficile à l'aide d'un seul liant polymère de remplir toutes les fonctions requises, certaines apparaissant en effet contradictoires. Par exemple, la stabilité électrochimique de l'électrode au cyclage nécessite des liaisons fortes entre le liant polymère et la matière active. La présence de groupements fonctionnels assure cette fonction. Cependant, les liaisons interchaînes fortes conduisent généralement à une structure rigide.

Dans les générateurs électrochimiques rechargeables au lithium classiques, on emploie couramment comme liant un polymère comme le polytétrafluoroéthylène (PTFE), qui possède une excellente stabilité dans l'électrolyte. Par contre, les propriétés antiadhérentes du PTFE interdisent l'utilisation d'un support conducteur mince tel qu'un feuillard, indispensable à l'obtention de fortes énergies volumiques. De plus, la stabilité du PTFE vis-à-vis des réducteurs puissants est faible en raison de la présence de nombreux atomes de fluor.

Plus récemment, le polyfluorure de vinylidène (PVDF) et ses copolymères se sont imposés comme liants d'électrodes utilisés dans le cadre d'un procédé de préparation bien adapté au dépôt d'électrode sur un feuillard métallique.

Ce mode de préparation consiste à mettre le PVDF en solution dans un solvant puis à lui ajouter une matière active pour obtenir une pâte. On enduit le feuillard métallique de faible épaisseur avec la pâte comprenant la matière active et la solution de polymère, puis le solvant est éliminé en séchant l'électrode. On obtient ainsi des électrodes denses et minces.

Les propriétés mécaniques et électrochimiques conférées par le PVDF permettent d'atteindre un bon compromis entre les multiples exigences exposées plus haut. Par contre, l'adhérence sur le feuillard reste mauvaise, en raison de la faible tension superficielle du liant, et nécessite l'ajout de promoteurs d'adhésion. De plus, la stabilité vis-à-vis des réducteurs n'est pas satisfaisante en raison de la présence de fluor, ce qui conduit à des problèmes de sécurité en cas d'emballement thermique.

D'autres polymères ont été plus récemment proposés pour cette application.

Le polyacrylonitrile (PAN) confère une excellente stabilité électrochimique en raison de ses groupements fortement polaires, mais l'électrode est rigide.

De même, l'acide polyacrylique (PAAc), la polyacrylamide (PAA) et leurs copolymères conduisent à des structures extrêmement stables mais rigides, ce qui nécessite l'addition d'un plastifiant.

Les élastomères, tels que le terpolymère éthylène/propylène/diène (EPDM), le caoutchouc styrène/ butadiène (SBR), le caoutchouc acrylonitrile/butadiène (NBR) et les copolymères bloc SBS ou SIS, confèrent à l'électrode d'excellentes propriétés mécaniques, mais donnent lieu à des baisses importantes de capacité au cours du cyclage.

Le document EP-0 606 533 décrit des polyimides qui permettent d'obtenir un bon compromis entre les propriétés électrochimiques et mécaniques, mais qui nécessitent une étape de réticulation à haute température. En outre, les polyimides sont des polymères coûteux.

De même, ont été proposés comme liant d'électrode les mélanges de polymères aux propriétés complémentaires dans lesquels la formulation contient:
- au moins un polymère appartenant à la famille des élastomères non fluorés, qui confère la souplesse à l'électrode, et
- un polymère capable d'assurer des liaisons fortes avec la matière active,.

Le principal défaut de ces mélanges est, d'une part, la difficulté à obtenir une pâte homogène, en raison de l'incompatibilité des constituants, et, d'autre part, la difficulté à prédire la répartition des liants dans l'électrode finale, les différents composants ayant des propriétés de solubilité ou de coagulation différentes lors de l'étape d'élimination du solvant.

Les propriétés des électrodes de l'art antérieur restent donc très dépendantes des techniques de fabrication industrielle utilisées.

La présente invention propose un liant pour électrode de système électrochimique à électrolyte organique, contenant un mélange d'au moins deux polymères dotés de groupements fonctionnels de polarité opposée, l'un desdits polymères étant doté de groupements fonctionnels acides et l'autre desdits polymères étant doté de groupements fonctionnels basiques, caractérisé en ce que lesdits polymères sont solubles et forment en solution un complexe identifiable par des mesures de propriétés physicochimiques.

L'existence d'un complexe est avérée quand une propriété physique du mélange n'est pas simplement la moyenne de celles des deux constituants ; ce qui exclut les simples mélanges de polymères.

L'existence d'un complexe est vérifiable par l'observation d'un extremum dans la variation de certaines propriétés physicochimiques en fonction de la proportion d'un des polymères, l'une de ces propriétés étant par exemple la température de transition vitreuse.

La formation d'un complexe peut également être visualisée par l'apparition d'un précipité dans un solvant, après avoir mélangé deux polymères solubles séparément dans ce solvant. Dans ce cas, l'énergie de solvatation des polymères est inférieure à l'énergie de formation du complexe et il est nécessaire de prévoir un additif empêchant l'approche des deux constituants, par exemple un additif solvatant fortement l'un des polymères qui s'évapore lors du séchage de l'électrode.

L'avantage principal de ce liant réside dans l'existence de liaisons fortes entre les constituants polymériques qui suppriment un degré de liberté du système et permettent d'obtenir une homogénéité accrue, tant au niveau de la pâte, dont la stabilité est accrue, qu'au niveau de la répartition finale dans l'électrode. De plus, l'existence de complexes défavorise les liaisons interchaînes des constituants et conduit généralement à des structures souples sans recourir à l'ajout d'élastomère.

Les deux polymères susceptibles de former un complexe sont avantageusement dotés de groupements fonctionnels de polarité opposée.

En particulier, l'un des polymères est doté de groupements fonctionnels acides et l'autre des polymères est doté de groupements fonctionnels basiques au sens de LEWIS . L'interaction entre chaînes se fait soit par une liaison hydrogène si l'un des polymères est porteur d'une fonction "acide de BRONSTOËD", comme par exemple l'acide polyacrylique ou l'anhydride maléïque, soit par des interactions ioniques si l'un des polymères est ionique, comme par exemple la carboxyméthylcellulose.

Pour qu'un complexe puisse se former, il faut que les groupements fonctionnels soient accessibles et portés par une chaîne linéaire pour augmenter le nombre de liaisons. Il ne se formera pas de complexe si le nombre de groupements fonctionnels par chaîne est insuffisant. C'est par exemple le cas des copolymères où le monomère porteur du groupement fonctionnel se trouve dilué dans un autre monomère, la probabilité de former un complexe est alors très faible. Par le terme polymère, on désigne ici des homopolymères.

Dans le cadre de la présente invention, on préfère les liants pour lesquels l'un desdits polymères est choisi parmi l'acide polyacrylique et l'acide polyméthacrylique et l'autre est choisi parmi le polyoxyde d'éthylène, le polyacrylamide, la polyéthylèneimine, la carboxyméthylcellulose, le polyvinylalcool et la polyvinylpyrrolidone.

On préfère également les liants pour lesquels l'un desdits polymères est le polyoxyde d'éthylène et l'autre est choisi parmi la polyvinylpyrrolidone, la polyurée, et la carboxyméthylcellulose, et plus particulièrement les liants pour lesquels l'un desdits polymères est le polyoxyde d'éthylène et l'autre est la carboxyméthylcellulose.

On préfère aussi un liant pour lequel l'un desdits polymères est le polyéthylèneimine et l'autre desdits polymères est la carboxyméthylcellulose.

On préfère également les liants pour lesquels l'un desdits polymères est l'acide polyacrylique (PAAc) ou l'acide méthacrylique et l'autre est le polyoxyde d'éthylène (PEO) ou le polyacrylamide. On préfère plus particulièrement les liants pour lesquels l'un desdits polymères est l'acide polyacrylique et l'autre est le polyoxyde d'éthylène ou bien encore l'un desdits polymères est l'acide polyacrylique et l'autre est le polyacrylamide.

Dans le cas d'un complexe formé par l'acide polyacrylique (PAAc) et le polyoxyde d'éthylène (PEO), une liaison hydrogène forte entre le groupement carboxyle du PAAc et l'oxygène de la liaison éther du PEO se répète le long des chaînes polymériques.

Pour un couple de polymères donné, on optimise les propriétés du complexe formé en jouant sur la masse moléculaire et la proportion de chacun desdits deux polymères. Les complexes de l'invention ainsi obtenus sont flexibles même si aucun des polymères formant le complexe n'est flexible lui-même.

Les deux polymères susceptibles de former un complexe peuvent être mélangés dans des proportions très variables, mais préférentiellement non stoechiométriques, afin de disposer de groupements fonctionnels libres pour assurer les fonctions d'adhésion et de cohésion.

La présente invention concerne également le procédé de fabrication d'une électrode contenant le liant décrit précédemment.

Pour la réalisation d'une électrode selon l'invention, le liant est constitué d'au moins un couple de polymères formant un complexe.

Le procédé de fabrication d'une électrode consiste, lors d'une première étape, à fabriquer une pâte à partir d'une matière active divisée et du liant de l'invention. Lors de cette première étape, les deux polymères susceptibles de former un complexe sont mis en solution dans un solvant, comme l'eau, les alcools, les amines, les dioxanes, la N-méthyl-pyrrolidone, ou leurs mélanges.

On ajoute éventuellement un antiprécipitant auxdits polymères mis en solution, comme l'acétone ou la triéthylamine, si le complexe formé n'est pas soluble dans le solvant.

Les étapes suivantes consistent en l'étalement de la pâte sur un feuillard métallique, par exemple en cuivre, nickel, acier, inox ou aluminium, suivi d'un séchage en étuve puis d'un calandrage jusqu'à obtention de la porosité désirée comprise entre 20 et 60 %.

Les électrodes ainsi obtenues peuvent être utilisées pour l'élaboration de systèmes électrochimiques parmi lesquels les générateurs, notamment au lithium, les supercondensateurs et les systèmes électrochromes.

La présente invention concerne tout système électrochimique incluant une électrode fabriquée selon le procédé décrit précédemment ou contenant le liant de l'invention.

Dans le cas des générateurs rechargeables à électrolyte organique comprenant au moins une électrode négative et une électrode positive, le matériau actif de l'électrode négative élaborée selon le procédé de l'invention peut être choisi parmi tous types de matériaux susceptibles d'intercaler ou d'absorber des cations à bas potentiel (soit un potentiel inférieur à 1,5 V dans le cas du cation Li⁺), en particulier les carbones cristallisés, comme les graphites en poudre ou en fibres, les carbones peu cristallisés graphitables, comme les cokes, ou non graphitables, comme les carbones vitreux ou les noirs de carbone, et leurs mélanges. Le matériau actif de l'électrode négative peut également être choisi parmi les composés contenant un métal susceptible de former un alliage avec le lithium, comme des oxydes, des sulfures, des nitrures ou des carbures métalliques.

Le matériau actif de l'électrode positive d'un générateur rechargeable à électrolyte organique, élaborée selon le procédé de l'invention, peut être choisi parmi tous types de matériaux positifs susceptibles d'intercaler ou d'absorber des cations à haut potentiel (soit un potentiel supérieur à 2,5 V dans le cas du cation Li⁺), comme les oxydes lithiés de métaux de transition, les sulfures ou les sulfates.

L'électrolyte organique des générateurs rechargeables selon l'invention est liquide et contient un sel conducteur dissous dans un solvant.

Le solvant est choisi parmi les carbonates, dont les carbonates cycliques comme les carbonates d'éthylène, de propylène, de vinylène, et les carbonates non cycliques comme le diméthylcarbonate, le diéthylcarbonate, le méthyléthylcarbonate, les esters d'alkyle comme les formiates, les acétates, les propionates, les butyrates, les composés cycliques comprenant un atome d'azote et d'oxygène, comme la N-méthyl-pyrrolidone, ainsi que leurs mélanges.

Le sel conducteur est à base d'ions alcalins ou alcalino-terreux comme LiPF₆, LiBF₄, LiClO₄, LiCF₃SO₃, trifluorosulfonimide de lithium.

D'autres caractéristiques et avantages de la présente invention apparaîtront à la lecture des exemples suivants, donnés à titre illustratif mais non limitatif, en référence aux figures 1 à 18 :
- la figure 1 représente la tension (en volts/Li) en fonction de la capacité (en mAh/g) d'une électrode négative montée dans une cellule bouton au cours du premier cyclage effectué à 20mA/g ; le liant de cette électrode est constituée d'un complexe acide polyacrylique/polyoxyde d'éthylène (M = 6 000g) dans les proportions 3,1%/1,9% en poids, la contre-électrode est en lithium métallique ;
- la figure 2 représente l'évolution, en fonction du nombre de cycles, de la capacité (en mAh/g) de l'électrode négative de la figure 1 ;
- la figure 3 représente la tension (en volts/Li) en fonction de la capacité (en mAh/g) d'une électrode négative montée dans une cellule bouton au cours du premier cyclage effectué à 20mA/g ; le liant de cette électrode est constituée d'un complexe acide polyacrylique/polyoxyde d'éthylène (M = 4 000 000g) dans les proportions 3,1%/1,9% en poids, la contre-électrode est en lithium métallique ;
- la figure 4 représente l'évolution, en fonction du nombre de cycles, de la capacité (en mAh/g) de l'électrode négative de la figure 3 ;
- la figure 5 représente la tension (en volts/Li) en fonction de la capacité (en mAh/g) d'une électrode négative montée dans une cellule bouton au cours du premier cyclage effectué à 20mA/g ; le liant de cette électrode est constituée d'un complexe acide polyacrylique/diméthacrylate de tétraéthylèneglycol (TEGDMA) dans les proportions 3,1%/1,9% en poids. La contre-électrode est en lithium métallique ;
- la figure 6 représente l'évolution, en fonction du nombre de cycles, de la capacité (en mAh/g) de l'électrode négative de la figure 5 ;
- la figure 7 représente la tension (en volts/Li) en fonction de la capacité (en mAh/g) d'une électrode négative montée dans une cellule bouton au cours du premier cyclage effectué à 20mA/g. Le liant de cette électrode est constituée d'un complexe acide polyacrylique/polyoxyde d'éthylène (M = 6 000g) dans les proportions 3,9%/1,1% en poids, la contre-électrode est en lithium métallique ;
- la figure 8 représente l'évolution, en fonction du nombre de cycles, de la capacité (en mAh/g) de l'électrode négative de la figure 7 ;
- la figure 9 représente la tension (en volts/Li) en fonction de la capacité (en mAh/g) d'une électrode négative montée dans une cellule bouton au cours du premier cyclage effectué à 20mA/g ; le liant de cette électrode est constituée d'un complexe acide polyacrylique/polyoxyde d'éthylène (M = 4 000 000g) dans les proportions 3,9%/1,1% en poids ; la contre-électrode est en lithium métallique ;
- la figure 10 représente l'évolution, en fonction du nombre de cycles, de la capacité (en mAh/g) de l'électrode négative de la figure 9 ;
- la figure 11 représente la tension (en volts/Li) en fonction de la capacité (en mAh/g) d'une électrode négative montée dans une cellule bouton au cours du premier cyclage effectué à 20mA/g ; le liant de cette électrode est constituée d'un complexe acide polyacrylique/diméthacrylate de tétraéthylèneglycol (TEGDMA) dans les proportions 3,9%/1,1% en poids, la contre-électrode est en lithium métallique ;
- la figure 12 représente l'évolution, en fonction du nombre de cycles de la capacité (en mAh/g) de l'électrode négative de la figure 11 ;
- la figure 13 représente la tension (en volts/Li) en fonction de la capacité (en mAh/g) d'une électrode négative montée dans une cellule bouton au cours du premier cyclage effectué à 20mA/g ; le liant de cette électrode est constituée d'un complexe acide polyacrylique/polyacrylamide dans les proportions 2,5%/2,5% en poids, la contre-électrode est en lithium métallique ;
- la figure 14 représente l'évolution, en fonction du nombre de cycles, de la capacité (en mAh/g) de l'électrode négative de la figure 13 ;
- la figure 15 représente la tension (en volts/Li) en fonction de la capacité (en mAh/g) d'une électrode négative montée dans une cellule bouton au cours du premier cyclage effectué à 20mA/g ; le liant de cette électrode est constituée d'un complexe acide polyacrylique/polyacrylamide dans les proportions 1,75%/3,25% en poids, la contre-électrode est en lithium métallique ;
- la figure 16 représente l'évolution, en fonction du nombre de cycles, de la capacité (en mAh/g) de l'électrode négative de la figure 15 ;
- la figure 17 représente la tension (en volts/Li) en fonction de la capacité (en mAh/g) d'une électrode négative montée dans une cellule bouton au cours du premier cyclage effectué à 20mA/g ; le liant de cette électrode est constituée d'un complexe acide polyacrylique/polyacrylamide dans les proportions 3,25%/1,75% en poids, la contre-électrode est en lithium métallique ;
- la figure 18 représente l'évolution, en fonction du nombre de cycles, de la capacité (en mAh/g) de l'électrode négative de la figure 17.

### Exemple 1 : Complexe acide polyacrylique/polyoxyde d'éthylène (M = 6 000g) en proportion stoechiométrique.

On mélange 100g de solution d'acide polyacrylique de masse moléculaire 250 000g à 3,1% dans l'eau, à 100g de solution de polyoxyde d'éthylène de masse moléculaire 6 000g à 1,9% dans l'eau. On ajoute progressivement à la solution 10g d'acétone comme antiprécipitant du complexe et 95g de graphite artificiel en poudre de diamètre moyen 20µm.

La pâte obtenue est étalée sur un feuillard de cuivre, et l'électrode est séchée à 100°C pendant 15 minutes, puis calandrée jusqu'à l'obtention d'une porosité de 40%

L'électrode, après évaporation du solvant à 100°C, est constituée de 95% de graphite, 3,1% d'acide polyacrylique et 1,9% de polyoxyde d'éthylène. L'évaluation de l'électrode négative ainsi obtenue est effectuée en la montant dans une cellule bouton dotée d'une contre-électrode au lithium métallique. L'électrolyte est une solution de LiPF₆ 1M dans le mélange carbonate de propylène/carbonate d'éthylène/carbonate de diméthyle.

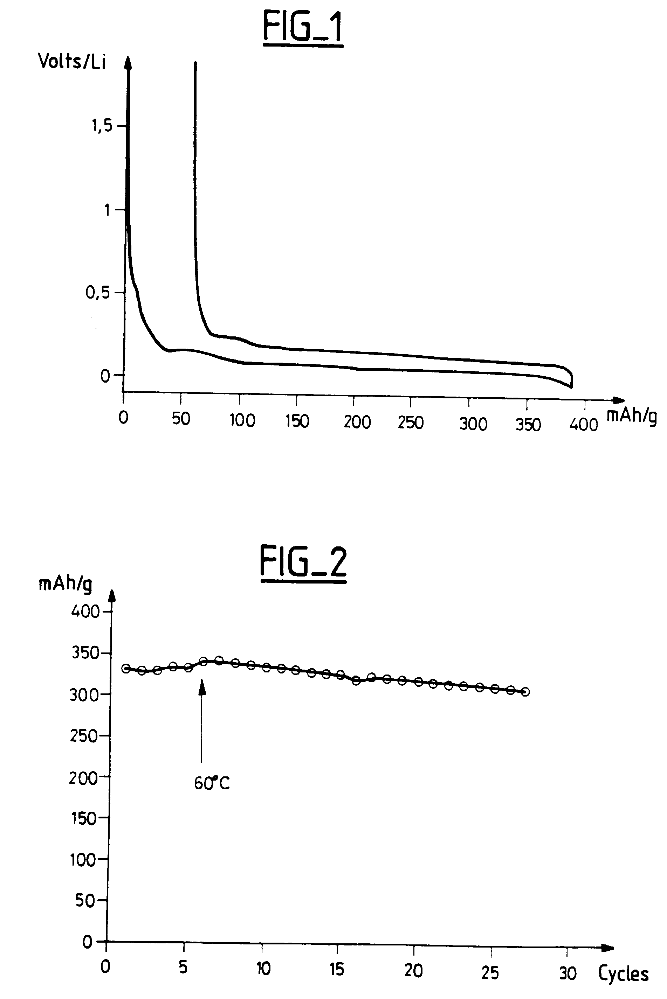

Le cyclage galvanostatique effectué à 20mA/g montre que les pertes faradiques au premier cycle, qui correspondent aux réactions irréversibles de passivation et d'exfoliation, sont faibles (voir figure 1). La capacité de l'électrode négative est relativement stable au cyclage, avec toutefois une perte de performances au cyclage en conditions extrêmes à 60°C (voir figure 2).

### Exemple 2 : Complexe acide polyacrylique/polyoxyde d'éthylène (M = 4 000 000g) en proportion stoechiométrique.

On procède comme dans l'exemple 1 mais en prenant du polyoxyde d'éthylène de masse moléculaire 4 000 000g.

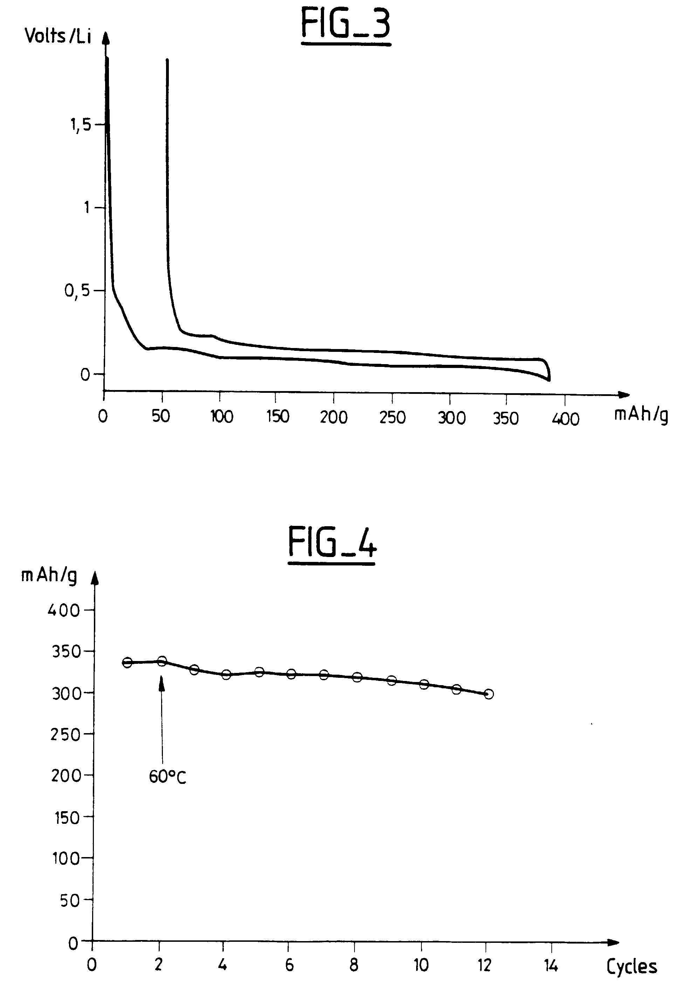

Les résultats d'évaluation de l'électrode obtenue sont présentés figures 3 et 4.

### Exemple 3 : Complexe acide polyacrylique/diméthacrylate de tétraéthylèneglycol (TEGDMA) en proportion stoechiométrique.

On procède comme dans l'exemple 1 en utilisant une solution de TEGDMA à la place de la solution de PEO et sans ajouter d'acétone.

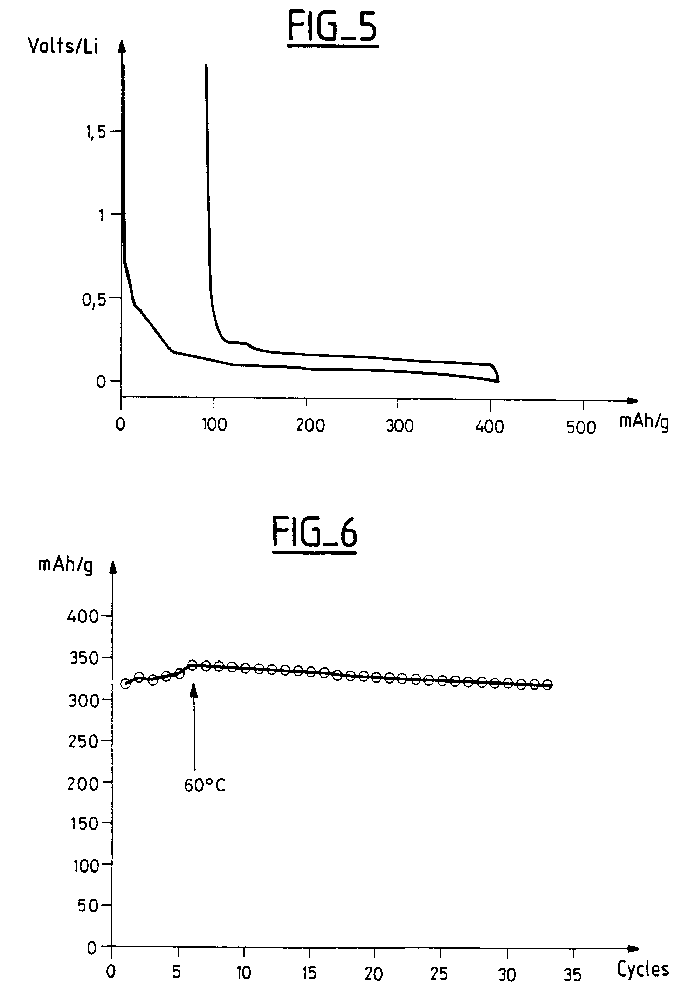

Les résultats d'évaluation de l'électrode obtenue sont présentés figures 5 et 6.

### Exemple 4 : Complexe acide polyacrylique/polyoxyde d'éthylène (M = 6 000g) en proportion non stoechiométrique.

On procède comme dans l'exemple 1 mais en prenant une solution de polyoxyde d'éthylène de masse moléculaire 6 000g à 1,1% dans l'eau.

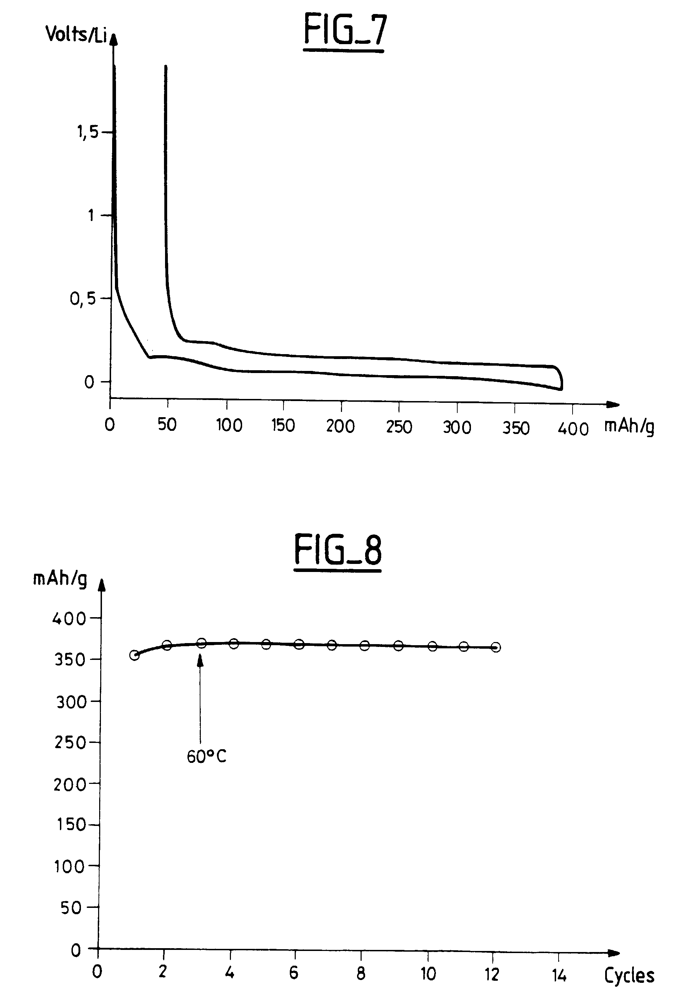

Les résultats d'évaluation de l'électrode obtenue sont présentés figures 7 et 8.

On remarque que la capacité de l'électrode négative est stable au cyclage, même dans des conditions extrêmes à 60°C.

### Exemple 5 : Complexe acide polyacrylique/polyoxyde d'éthylène (M = 4 000 000g) en proportion non stoechiométrique.

On procède comme dans l'exemple 1 mais en prenant une solution de polyoxyde d'éthylène de masse moléculaire 4 000 000g à 1,1% dans l'eau.

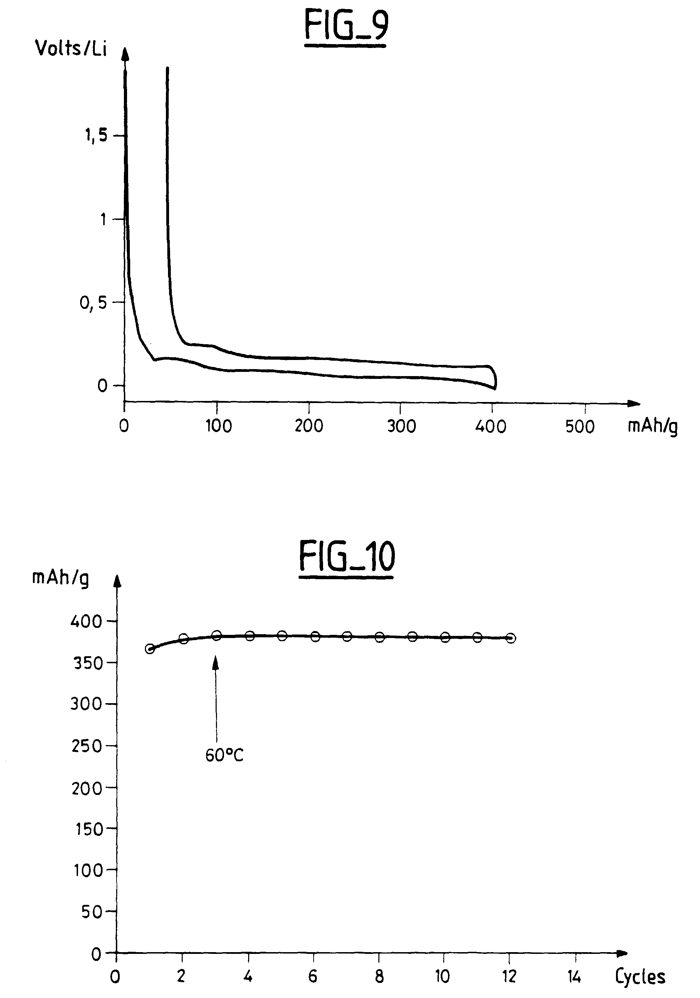

Les résultats d'évaluation de l'électrode obtenue sont présentés figures 9 et 10.

### Exemple 6 : Complexe acide polyacrylique/TEGMA en proportion non stoechiométrique.

On procède comme dans l'exemple 1 mais en utilisant une solution de TEGMA à 1,1% dans l'eau à la place de la solution de polyoxyde d'éthylène à 1,9% dans l'eau, et sans ajouter d'acétone.

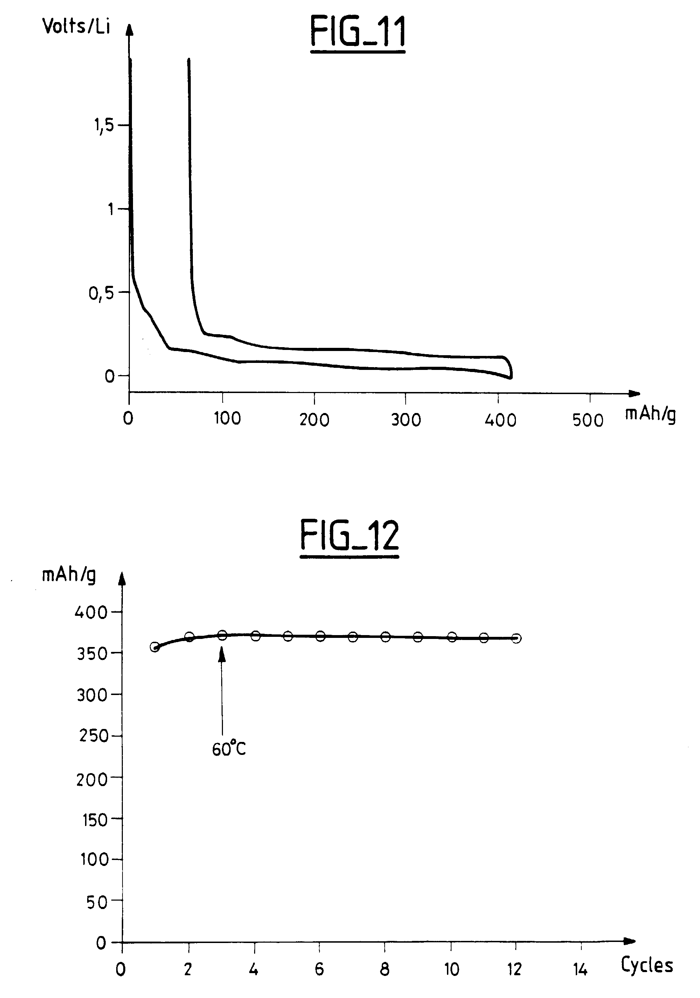

Les résultats d'évaluation de l'électrode obtenue sont présentés figures 11 et 12.

### Exemple 7 : Complexe acide polyacrylique/polyacrylamide (M = 5 000 000g) en proportion stoechiométrique.

On procède comme dans l'exemple 1 mais en mélangeant 100g d'une solution d'acide polyacrylique de masse moléculaire 250 000g à 2,5% dans l'eau et 100g d'une solution de polyacrylamide de masse moléculaire 5 000 000g à 2,5% dans l'eau.

En outre, l'antiprécipitant utilisé n'est plus l'acétone (10g) mais la triéthylamine (5g).

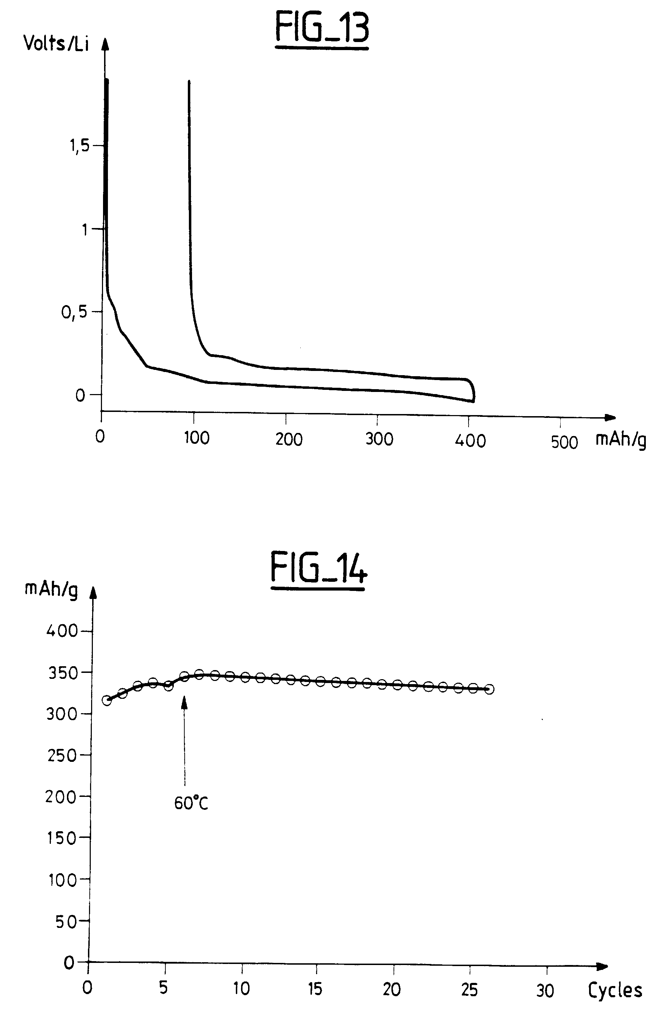

Les résultats d'évaluation de l'électrode obtenue sont présentés figures 13 et 14.

### Exemple 8 : Complexe acide polyacrylique/polyacrylamide (M = 5 000 000g) en proportion non stoechiométrique.

On procède comme dans l'exemple 1 mais en mélangeant 100g d'une solution d'acide polyacrylique de masse moléculaire 250 000g à 1,75% dans l'eau et une solution de polyacrylamide de masse moléculaire 5 000 000g à 3,25% dans l'eau.

En outre, l'antiprécipitant utilisé n'est plus l'acétone (10g) mais la triéthylamine (5g).

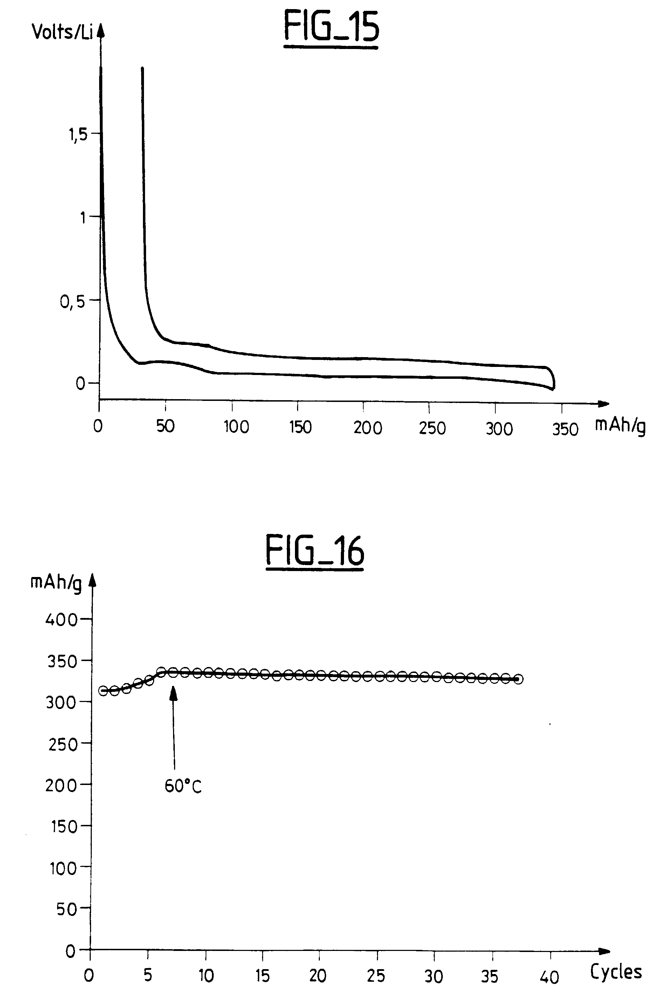

Les résultats d'évaluation de l'électrode obtenue sont présentés figures 15 et 16.

### Exemple 9 : Complexe acide polyacrylique/polyacrylamide (M = 5 000 000g) en proportion non stoechiométrique.

On procède comme dans l'exemple 1 mais en mélangeant 100g d'une solution d'acide polyacrylique de masse moléculaire 250 000g à 3,25% dans l'eau et une solution de polyacrylamide de masse moléculaire 5 000 000g à 1,75% dans l'eau.

En outre, l'antiprécipitant utilisé n'est plus l'acétone (10g) mais la triéthylamine (5g).

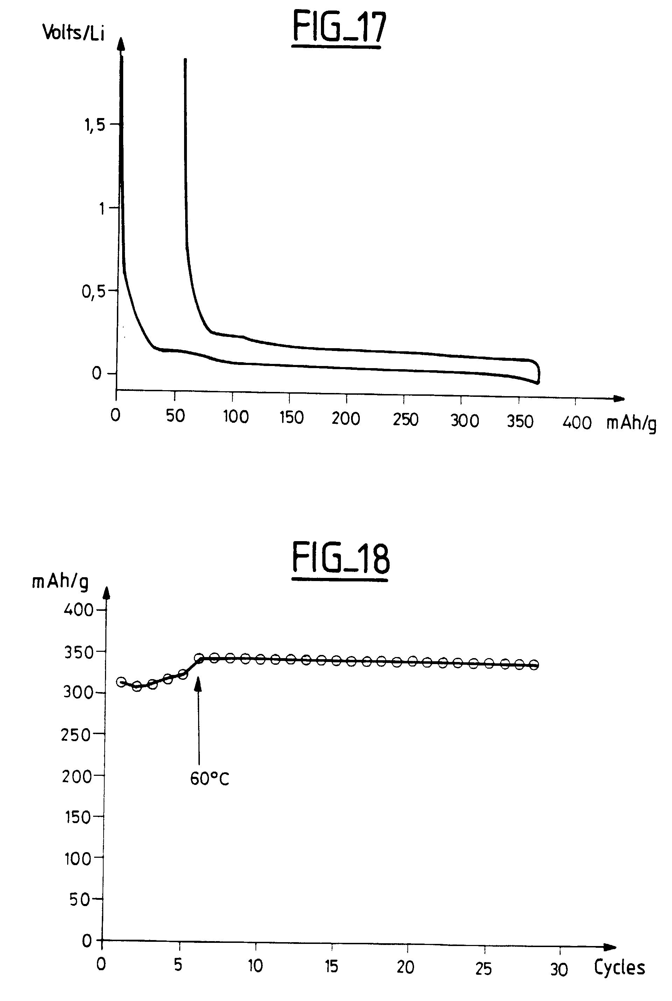

Les résultats d'évaluation de l'électrode obtenue sont présentés figures 17 et 18.

## Revendications

1. Liant pour électrode de système électrochimique à électrolyte organique, contenant un mélange d'au moins deux polymères dotés de groupements fonctionnels de polarité opposée, l'un desdits polymères étant doté de groupements fonctionnels acides et l'autre desdits polymères étant doté de groupements fonctionnels basiques, caractérisé en ce que
- l'un desdits polymères est choisi parmi le polyoxyde d'éthylène, le polyacrylamide, la polyéthylèneimine, le polyvinylalcool et la polyvinylpyrrolidone, lorsque l'autre est l'acide polyacrylique ou l'acide polyméthacrylique
- l'un desdits polymères est choisi parmi la polyvinylpyrrolidone, la polyurée, et la carboxyméthylcellulose lorsque l'autre desdits polymères est le polyoxyde d'éthylène,
- l'un desdits polymères est la polyéthylèneimine lorsque l'autre est la carboxyméthylcellulose,
lesdits polymères étant solubles et formant en solution un complexe identifiable par des mesures de propriétés physicochimiques,

2. Liant selon la revendication 1, caractérisé en ce que l'un desdits polymères est la polyoxyde d'éthylène et l'autre est la carboxyméthylcellulose.

3. Liant selon la revendication 1, caractérisé en ce que l'un desdits polymères est l'acide polyacrylique ou l'acide méthacrylique et l'autre est le polyoxyde d'éthylène ou le polyacrylamide.

4. Liant selon la revendication 3, caractérisé en ce que l'un desdits polymères est l'acide polyacrylique et l'autre est le polyoxyde d'éthylène.

5. Liant selon la revendication 3, caractérisé en ce que l'un desdits polymères est l'acide polyacrylique et l'autre est le polyacrylamide.

6. Liant selon l'une des revendications précédentes, caractérisé en ce qu'on optimise les propriétés du complexe formé en jouant sur la masse moléculaire et la proportion de chacun desdits deux polymères.

7. Liant selon l'une des revendications précédentes, caractérisé en ce que lesdits deux polymères susceptibles de former un complexe sont mélangés en proportions non stoechiométriques.

8. Procédé de fabrication d'une électrode consistant, lors d'une première étape, à fabriquer une pâte à partir d'une matière active divisée et du liant selon l'une des revendications 1 à 7, caractérisé en ce que, lors de ladite première étape, les deux polymères susceptibles de former un complexe sont mis en solution dans un solvant.

9. Procédé selon la revendication 8, caractérisé en ce que le solvant est choisi parmi l'eau, les alcools, les amines, les dioxanes, la N-méthyl-pyrrolidone ou leurs mélanges.

10. Procédé selon l'une des revendications 8 et 9, caractérisé en ce qu'on ajoute un antiprécipitant auxdits polymères mis en solution, si le complexe formé n'est pas soluble dans le solvant.

11. Procédé selon l'une des revendications 8 à 9, caractérisé en ce que l'antiprécipitant est l'acétone ou la triéthylamine.

12. Système électrochimique incluant une électrode fabriquée selon le procédé de l'une des revendications 8 à 11 ou contenant le liant selon l'une des revendications 1 à 7.

13. Générateur électrochimique rechargeable au lithium comprenant une électrode fabriquée selon le procédé de l'une des revendications 8 à 11 ou contenant le liant selon l'une des revendications 1 à 7
